(19) Europäisches Patentamt
European Patent Office
Office européen des brevets

(11) **EP 4 068 019 A1**

(12) **EUROPÄISCHE PATENTANMELDUNG**

(43) Veröffentlichungstag:
05.10.2022 Patentblatt 2022/40

(21) Anmeldenummer: 22161917.4

(22) Anmeldetag: 14.03.2022

(51) Internationale Patentklassifikation (IPC):
**G05B 19/4065** [(2006.01)]

(52) Gemeinsame Patentklassifikation (CPC):
B26F 1/00; B21D 28/02; B23Q 15/18;
G05B 19/4065; G05B 2219/37252;
G05B 2219/37291; G05B 2219/37337;
G05B 2219/37432; G05B 2219/45137;
G05B 2219/49102; G05B 2219/49206

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **01.04.2021 DE 102021108311**

(71) Anmelder: **Lisa Dräxlmaier GmbH**
**84137 Vilsbiburg (DE)**

(72) Erfinder:
• **Hinterbrandner, Florian**
**83471 Schönau am Königsee (DE)**
• **GIRSCHICK, Tobias**
**84036 Landshut (DE)**

(54) **VORRICHTUNG UND VERFAHREN ZUR AUFBEREITUNG DER ERFASSTEN ZUSTANDSGRÖSSEN EINES STANZPROZESSES**

(57) Die Erfindung betrifft eine Vorrichtung zur Zustandsbestimmung eines Stanzprozesses, die ausgebildet ist, erste Daten, zweite Daten und dritte Daten zu erhalten, aus den ersten Daten und den zweiten Daten Anlaufdaten zu entfernen, welche während Perioden einer Inbetriebnahme des Stanzwerkzeugs erfasst wurden; die ersten Daten und die zweiten Daten zu interpolieren, um eine einheitliche Länge und Schrittweite der zweiten Daten in Bezug auf die ersten Daten für die Mehrzahl von Perioden des Stanzprozesses zu erhalten; Anomalien in den ersten Daten und zweiten Daten zu erkennen und zu entfernen; einen thermischen Störeinfluss der dritten Daten auf die ersten Daten und zweiten Daten zu bestimmen und zu kompensieren; und den Zustand des Stanzprozesses basierend auf den um den thermischen Störeinfluss kompensierten ersten Daten und zweiten Daten zu bestimmen

Fig. 1

**Beschreibung**

Die Erfindung betrifft eine Vorrichtung und ein Verfahren zur Zustandsbestimmung eines Stanzprozesses, insbesondere unter Aufbereitung der beim Stanzen erfassten Zustandsgrößen.

Mithilfe von Piezosensoren, Temperatursensoren und Drehgeber können Zustandsgrößen eines Stanzwerkzeugs erhoben werden. Es hat sich jedoch gezeigt, dass die erfassten Daten sehr hohe Varianzen aufweisen. Eine direkte Verwendung der Daten zur Zustandsbestimmung des Stanzwerkzeuges ist aufgrund der hohen Varianz nur eingeschränkt möglich.

Es ist eine Aufgabe der Erfindung, ein Konzept für eine verbesserte Bestimmung der Zustandsgrößen eines Stanzprozesses und eine verbesserte Zustandsbestimmung des Stanzprozesses zu schaffen, bei dem die oben beschriebenen Nachteile nicht auftreten.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die Erfindung basiert auf der Idee, verschiedene Datenaufbereitungsschritte bei der Bestimmung der Zustandsgrößen zu nutzen. Hierrunter fallen: 1. Entfernen von Daten, welche während der Inbetriebnahme der Maschine erzeugt wurden; 2. Interpolation der Daten, um eine einheitliche Länge der Zeitreihen zu gewährleisten; 3. Automatisches Erkennen und Entfernen von Anomalien; und 4. Kompensieren von Störeinflüssen.

Mithilfe geeigneter Sensorik werden die für die Umsetzung von "Predictive Maintenance" bzw. prädiktiver Instandhaltung relevanten Zustandsgrößen erfasst. Bei den Zustandsgrößen handelt es sich beispielsweise um den Körperschall des Stanzwerkzeugs, die Temperatur des Stanzwerkzeugs und die Winkelinformation des Exzenters der Exzenterpresse bzw. die Weginformation bei Hydraulikpressen. Zum Erfassen des Körperschalls werden beispielsweise mehrere Piezosensoren in das Stanzwerkzeug platziert. In unmittelbarer Nähe befinden sich die Temperatursensoren. Der Winkel kann mithilfe eines Drehgebers aufgezeichnet werden. Nach der Datenerhebung können sämtliche Daten entfernt werden, die während des "Anstanzens" bzw. des Anlaufprozesses des Stanzwerkzeugs erzeugt wurden, da diese keinerlei Informationen über die eigentliche Produktion enthalten.

Untersuchungen zeigten, dass die Körperschallmessungen eine starke Temperaturabhängigkeit aufweisen. Um diese Abhängigkeit so genau wie möglich bestimmen zu können, werden zuvor automatisch Anomalien erkannt und entfernt. Der bereinigte Datensatz dient nun als Grundlage für die Bestimmung einer Ausgleichsfunktionenschar, welche die Temperaturabhängigkeit der Körperschallsignale beschreibt. Der thermische Einfluss ist so ausgeprägt, dass ein Verschleißverhalten nicht sichtbar ist. Da jedoch der Zustand des Stanzwerkzeugs bezüglich des Verschleißes bestimmt werden soll, muss der thermische Störeinfluss kompensiert werden. Hierzu kann die Ausgleichsfunktionenschar als Grundlage dienen.

Gemäß einem ersten Aspekt der Erfindung wird die Aufgabe gelöst durch eine Vorrichtung zur Zustandsbestimmung eines Stanzprozesses, bei dem ein Stanzwerkzeug zum Stanzen eines Werkstoffs periodisch von einer Ausgangsstellung in eine Endstellung bewegt wird, wobei die Vorrichtung ausgebildet ist, erste Daten zu erhalten, welche eine Kraft anzeigen, die bei dem Bewegen des Stanzwerkzeugs von der Ausgangsstellung in die Endstellung über eine Mehrzahl von Perioden des Stanzprozesses durch das Stanzwerkzeug auf den Werkstoff ausgeübt wird; zweite Daten zu erhalten, welche einen Winkel oder einen Weg anzeigen, die das Stanzwerkzeug bei dem Bewegen von der Ausgangsstellung in die Endstellung über die Mehrzahl von Perioden des Stanzprozesses zurückgelegt hat, dritte Daten zu erhalten, welche eine Temperatur des Stanzwerkzeugs über die Mehrzahl von Perioden des Stanzprozesses anzeigen; aus den ersten Daten und den zweiten Daten Anlaufdaten zu entfernen, welche während Perioden einer Inbetriebnahme des Stanzwerkzeugs erfasst wurden; die ersten Daten und die zweiten Daten zu interpolieren, um eine einheitliche Länge und Schrittweite der zweiten Daten in Bezug auf die ersten Daten für die Mehrzahl von Perioden des Stanzprozesses zu erhalten; Anomalien in den ersten Daten und zweiten Daten zu erkennen und zu entfernen; einen thermischen Störeinfluss der dritten Daten auf die ersten Daten und zweiten Daten zu bestimmen und zu kompensieren; und den Zustand des Stanzprozesses basierend auf den um den thermischen Störeinfluss kompensierten ersten Daten und zweiten Daten zu bestimmen.

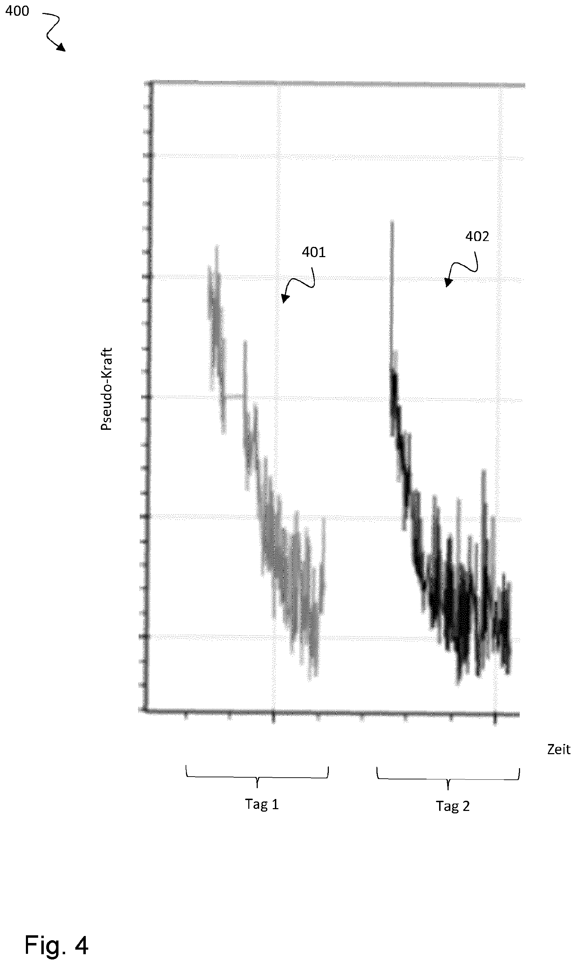

Bei dem Stanzprozess wird das Stanzwerkzeug von einer Ausgangsstellung in eine Endstellung bewegt, welche wieder der Ausgangsstellung entspricht, da es sich um einen periodischen Prozess handelt. Ausgangsstellung, Endstellung und verschiedene Zwischenstellungen sind am Beispiel einer Exzenterpresse in Figur 4 näher dargestellt.

Die Kraft, die bei dem Bewegen des Stanzwerkzeugs von der Ausgangsstellung in die Endstellung durch das Stanzwerkzeug auf den Werkstoff ausgeübt wird, wird nicht direkt sondern indirekt gemessen. Es wird das Körperschallsignal über die Piezosensoren erfasst, welches Aufschluss über die Kraft gibt und im Folgenden als Pseudo-Kraft bezeichnet wird.

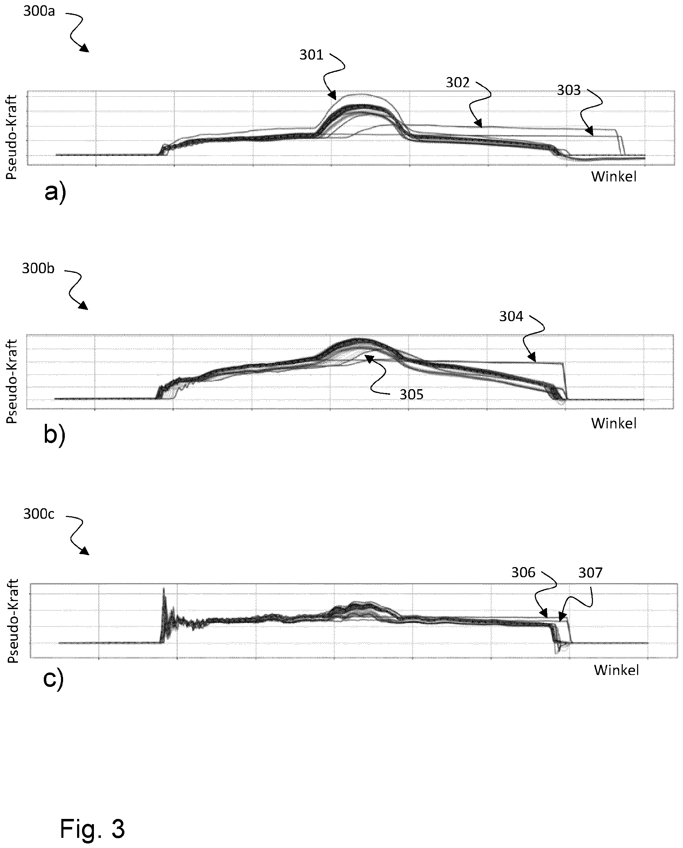

Eine Kombination aus den ersten und zweiten Daten gibt einen Hinweis auf die mechanische Arbeit, die in Form von Schwingungen und elastischen Verformungen an der jeweiligen Platte des Stanzwerkzeugs registriert wird. Ein beispielhafter Aufbau eines Stanzwerkzeugs ist in Figur 3 dargestellt und unten zu Figur 3 näher beschrieben.

Die hier offenbarte Vorrichtung erlaubt eine verbesserte Bestimmung der Zustandsgrößen des Stanzprozesses und eine verbesserte Zustandsbestimmung des Stanzprozesses.

Aufgrund der Datenaufbereitung wird es durch die hier offenbarte Vorrichtung ermöglicht, den Werkzeugzustand zu bestimmen und damit einhergehend die Grundlage für das dynamische Anpassen des Wartungsintervalls zu schaffen. Der Vorteil hierbei ist, dass ein versehentliches Überschreiten der Belastungsgrenze unterbunden werden kann. Eine Optimierung des Wartungsintervalls und eine damit verbundene Wartungskostenreduktion ist durchführbar.

Zusätzlich wird das Verschleißverhalten sichtbar und eine tiefergehende Ursachenforschung möglich. Rückschlüsse auf unbekannte Konstruktionsschwächen, systematische Fehler oder Handhabungsfehler können anschließend untersucht werden.

Gemäß einer beispielhaften Ausführungsform der Vorrichtung zeigen die ersten Daten die Kraft mittels einer Verbiegung oder Verformung des Stanzwerkzeugs an, welche aufgrund des Stanzprozesses auf das Stanzwerkzeug einwirkt. Diese Kraft wird im Folgenden auch als Pseudo-Kraft bezeichnet.

Dies bietet den technischen Vorteil, dass die Stanzkraft auf einfache Weise angezeigt werden kann, nämlich durch Messen der Verbiegung oder Verformung am Stanzwerkzeug, beispielsweise mittels Piezo-Sensoren, die am Stanzwerkzeug angebracht sind.

Gemäß einer beispielhaften Ausführungsform der Vorrichtung sind die ersten Daten Sensordaten von Piezosensoren, die in dem Stanzwerkzeug platziert sind.

Damit wird der technische Vorteil erreicht, dass über die Piezosensoren auf einfache und effiziente Weise eine Kraft, hier als "Pseudo-Kraft" bezeichnet, bestimmt werden kann, welche beispielsweise Anhaltspunkte zur mechanischen Arbeit liefert, welche auf das Stanzwerkzeug einwirkt. Ferner weisen viele Stanzwerkzeuge bereits solche Piezosensoren auf, so dass die damit erzeugten Daten ohne großen Aufwand zur weiteren Auswertung herangezogen werden können.

Gemäß einer beispielhaften Ausführungsform der Vorrichtung umfassen die zweiten Daten eine Winkelinformation eines Drehgebers des Stanzwerkzeugs, insbesondere eine Winkelinformation eines Exzenters einer Exzenterpresse; oder die zweiten Daten umfassen eine Weginformation eines Weggebers des Stanzwerkzeugs, insbesondere eine Weginformation eines Kolbens einer Hydraulikpresse.

Damit wird der technische Vorteil erreicht, dass über die Winkelinformation bzw. die Weginformation auf einfache Weise die mechanische Arbeit bestimmt werden kann, die auf das Stanzwerkzeug einwirkt und Aufschluss geben kann über das Verschleißverhalten des Stanzwerkzeugs.

Gemäß einer beispielhaften Ausführungsform der Vorrichtung umfassen die ersten Daten und die zweiten Daten Kraft-Winkel-Kurven, und die Vorrichtung ist ausgebildet, die Anlaufdaten basierend auf einer Abweichung einer Form der Kraft-Winkel-Kurven während den Perioden der Inbetriebnahme des Stanzwerkzeugs gegenüber einer Form der Kraft-Winkel-Kurven nach den Perioden der Inbetriebnahme des Stanzwerkzeugs zu bestimmen.

Damit wird der technische Vorteil erreicht, dass die Anlaufdaten des Stanzprozesses, welche keine geeigneten Daten für die Bewertung des Stanzprozesses sind, auf effiziente Weise aussortiert werden können.

Gemäß einer beispielhaften Ausführungsform der Vorrichtung ist die Vorrichtung ausgebildet, die Anlaufdaten basierend auf einer Verschiebung der Kraft-Winkel-Kurven während den Perioden der Inbetriebnahme des Stanzwerkzeugs in Richtung der Kraft zu bestimmen.

Damit wird der technische Vorteil erreicht, dass eine solche Verschiebung der Kraft-Winkel-Kurven Aufschluss darüber gibt, ob es sich um Anlaufdaten oder Daten während des normalen Produktionslaufs handelt. Die Anlaufdaten können somit auf geeignete Weise erkannt und entfernt werden, um die Zustandsbestimmung nicht zu stören.

Gemäß einer beispielhaften Ausführungsform der Vorrichtung ist die Vorrichtung ausgebildet, Kraft-Winkel-Kurven aus den ersten Daten und den zweiten Daten zu entfernen, welche bei einer Hubzahl des Stanzprozesses erzeugt wurden, die niedriger als ein fester Prozentsatz einer Nennhubzahl des Stanzprozesses ist.

Damit wird der technische Vorteil erreicht, dass über eine solche Hubzahl des Stanzprozesses sich die Anlaufdaten leicht von den normalen Produktionsdaten unterscheiden lassen und aussortiert werden können, um die Zustandsbestimmung nicht negativ zu beeinflussen.

Gemäß einer beispielhaften Ausführungsform der Vorrichtung ist die Vorrichtung ausgebildet, die ersten Daten und die zweiten Daten pro erfasster Periode des Stanzprozesses um einen oder mehrere Null-Einträge zu erweitern bis die zweiten Daten eine einheitliche Länge und Schrittweite in Bezug auf die ersten Daten aufweisen.

Damit wird der technische Vorteil erreicht, dass die verschiedenen Messreihen sich auf eine einheitliche Basis bzw. Skala beziehen und damit untereinander verglichen werden können.

Gemäß einer beispielhaften Ausführungsform der Vorrichtung umfassen die ersten Daten und die zweiten Daten Kraft-Winkel-Kurven, und die Vorrichtung ist ausgebildet, aus den Kraft-Winkel-Kurven eine Referenzkurve durch Mittelwertbildung zu erzeugen und eine Anomalie basierend auf einer Abweichung der Kraft-Winkel-Kurven zu der Referenzkurve zu bestimmen.

Damit wird der technische Vorteil erreicht, dass sich eine Anomalie in den gemessenen Daten leicht bestimmen lässt und aussortiert werden kann, um die Zustandsbestimmung nicht negativ zu beeinflussen.

Gemäß einer beispielhaften Ausführungsform der Vorrichtung basiert die Abweichung auf einem Produkt einer Standardabweichung der Kraft-Winkel-Kurven und einem einstellbaren Faktor.

Damit wird der technische Vorteil erreicht, dass sich die Erkennung einer Anomalie an die jeweilige Datenbasis anpassen lässt, um zu vermeiden, dass zu viele oder zu wenige Anomalien als solche erkannt werden. Das Aussortieren der Anomalien führt zu einer verbesserten Zustandsbestimmung des Stanzprozesses, da Ausreißer nicht berücksichtigt werden.

Gemäß einer beispielhaften Ausführungsform der Vorrichtung sind die ersten Daten und die zweiten Daten in verschiedene Kanäle unterteilt, wobei ein jeweiliger Kanal erste und zweite Daten umfasst, die mit einem entsprechenden Piezo-Sensor an dem Stanzwerkzeug aufgezeichnet wurden.

Damit wird der technische Vorteil erreicht, dass mittels Messung über die verschiedenen Kanäle sich genauere Aussagen über den Stanzprozess machen lassen, da mehr Daten zur Verfügung stehen. Die Zustandsbestimmung kann daher genauer erfolgen.

Gemäß einer beispielhaften Ausführungsform der Vorrichtung ist die Vorrichtung ausgebildet, bei Erkennen einer Anomalie in der Kraft-Winkel-Kurve eines der verschiedenen Kanäle auch die entsprechenden Kraft-Winkel-Kurven der anderen Kanäle als abnormal zu markieren.

Damit wird der technische Vorteil erreicht, dass Anomalien genauer detektiert werden können. Zum Beispiel ist eine Anomalie in einem Kanal ausgeprägt, in den anderen Kanälen weniger ausgeprägt. Dann können Anomalien in den weniger ausgeprägten Kanälen leichter erkannt werden und die Zustandsbestimmung kann präziser ausgeführt werden.

Gemäß einer beispielhaften Ausführungsform der Vorrichtung ist die Vorrichtung ausgebildet, eine Kompensationsfunktion für den thermischen Einfluss der dritten Daten auf die ersten Daten und die zweiten Daten zu bestimmen.

Damit wird der technische Vorteil erreicht, dass die Kompensationsfunktion den thermischen Einfluss der dritten Daten auf die ersten und zweiten Daten genau abbilden kann, so dass die um den thermischen Einfluss bereinigten ersten und zweiten Daten eine genauere Bestimmung des Zustands des Stanzprozesses zulassen.

Gemäß einer beispielhaften Ausführungsform der Vorrichtung basiert die Kompensationsfunktion auf einem Modell, das eine Abweichung der ersten Daten in Abhängigkeit der dritten Daten spezifiziert, wobei das Modell auf einer mathematischen Approximationsfunktion und/oder auf einer Prädiktion mittels Künstlicher Intelligenz basiert. Damit wird der technische Vorteil erzielt, dass eine genaue Bestimmung und Kompensation des thermischen Einflusses möglich ist.

Gemäß einer beispielhaften Ausführungsform der Vorrichtung ist die Kompensationsfunktion eine Polynomfunktion zweiter Ordnung oder eine e-Funktion, die sich wie folgt darstellen lassen:

$$F(\vartheta)_{comp} = a \cdot \vartheta^2 + b \cdot \vartheta + c$$

$$F(\vartheta)_{comp} = -a \cdot e^{b \cdot \vartheta + c} + d$$

,

wobei • die Temperatur darstellt und die Parameter a, b, c und d vorgegeben sind.

Damit wird der technische Vorteil erreicht, dass die Kompensationsfunktion sich leicht berechnen lässt, gleichzeitig aber den thermischen Einfluss genau abbildet.

Gemäß einer beispielhaften Ausführungsform der Vorrichtung ist die Vorrichtung ausgebildet, die Kompensationsfunktion für jeden einzelnen Winkel zu bestimmen und den thermischen Störeinfluss der dritten Daten auf die ersten Daten und zweiten Daten für jeden einzelnen Winkel zu kompensieren.

Damit wird der technische Vorteil erreicht, dass der thermische Störeinfluss, der abhängig vom Winkel des Stanzwerkzeugs ist, sich damit sehr genau bestimmen lässt und die ersten und zweiten Daten sich effizient von dem thermischen Störeinfluss bereinigen lassen.

Gemäß einem zweiten Aspekt der Erfindung wird die Aufgabe gelöst durch ein Verfahren zur Zustandsbestimmung eines Stanzprozesses, bei dem ein Stanzwerkzeug zum Stanzen eines Werkstoffs periodisch von einer Ausgangsstellung in eine Endstellung bewegt wird, wobei das Verfahren die folgenden Schritte aufweist: Erhalten von ersten Daten, welche eine Kraft anzeigen, die bei dem Bewegen des Stanzwerkzeugs von der Ausgangsstellung in die Endstellung über eine Mehrzahl von Perioden des Stanzprozesses durch das Stanzwerkzeug auf den Werkstoff ausgeübt wird; Erhalten von zweiten Daten, welche einen Winkel oder einen Weg anzeigen, die das Stanzwerkzeug bei dem Bewegen von der Ausgangsstellung in die Endstellung über die Mehrzahl von Perioden des Stanzprozesses zurückgelegt hat; Erhalten von dritten Daten, welche eine Temperatur des Stanzwerkzeugs über die Mehrzahl von Perioden des Stanzprozesses anzeigen; Entfernen von Anlaufdaten aus den ersten Daten und den zweiten Daten, welche während Perioden einer Inbetriebnahme des Stanzwerkzeugs erfasst wurden; Interpolieren der ersten Daten und der zweiten Daten, um eine einheitliche Länge und Schrittweite der zweiten Daten in Bezug auf die ersten Daten für die Mehrzahl von Perioden des Stanzprozesses zu erhalten; Erkennen und Entfernen von Anomalien in den ersten Daten und zweiten Daten; Bestimmen und Kompensieren eines thermischen Störeinflusses der dritten Daten auf die ersten Daten und zweiten Daten; und Bestimmen des Zustands des Stanzprozesses basierend auf den um den thermischen Störeinfluss kompensierten ersten Daten und zweiten Daten.

Mit einem solchen Verfahren lassen sich die Zustandsgrößen des Stanzprozesses besser bestimmen und der Zustand des Stanzprozesses kann damit genauer bestimmt werden.

Aufgrund der Datenaufbereitung wird es durch das hier beschriebene Verfahren ermöglicht, den Werkzeugzustand zu bestimmen und damit einhergehend die Grundlage für das dynamische Anpassen des Wartungsintervalls zu schaffen. Der Vorteil hierbei ist, dass ein versehentliches Überschreiten der Belastungsgrenze unterbunden werden kann. Eine Optimierung des Wartungsintervalls und eine damit verbundene Wartungskostenreduktion ist durchführbar.

Zusätzlich wird mit dem hier beschriebenen Verfahren das Verschleißverhalten sichtbar und eine tiefergehende Ursachenforschung möglich. Rückschlüsse auf unbekannte Konstruktionsschwächen, systematische Fehler oder Handhabungsfehler können anschließend untersucht werden.

Im Folgenden wird die Erfindung anhand von Ausführungsbeispielen und den Figuren näher beschrieben. In den Figuren zeigen:

Fig. 1        eine schematische Darstellung einer Vorrichtung 100 zur Zustandsbestimmung eines Stanzprozesses gemäß der Offenbarung;

Fig. 2a/b/c   drei beispielhafte Darstellungen erfasster Kraft-Winkel-Kurven 200a, 200b, 200c für drei Kanäle des Stanzprozesses;

Fig. 3a/b/c   drei beispielhafte Darstellungen der von Anlaufdaten bereinigten Kraft-Winkel-Kurven 300a, 300b, 300c für drei Kanäle des Stanzprozesses;

Fig. 4        eine beispielhafte Darstellung der Pseudo-Kraft 400 über der Zeit für Messungen an zwei verschiedenen Tagen ohne Kompensation des thermischen Einflusses;

Fig. 5a/b     eine beispielhafte Darstellung der Pseudo-Kraft (500a ohne Glättungsfilter bzw. 500b mit Glättungsfilter) über der Zeit für Messungen über mehrere Monate mit Kompensation des thermischen Einflusses;

Fig. 6a/b     zwei beispielhafte Darstellungen der Kraft-Winkel-Kurven 600a, 600b nach Aufbereitung der erfassten Zustandsgrößen gemäß der Offenbarung;

Fig. 7        eine beispielhafte Darstellung der Zustände 700a, 700b, 700c eines Stanzprozesses am Beispiel einer Exzenterpresse;

Fig. 8        eine beispielhafte Darstellung eines Stanzwerkzeugs 800 gemäß der Offenbarung; und

Fig. 9        eine schematische Darstellung eines Verfahrens 900 zur Zustandsbestimmung eines Stanzprozesses gemäß der Offenbarung;

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

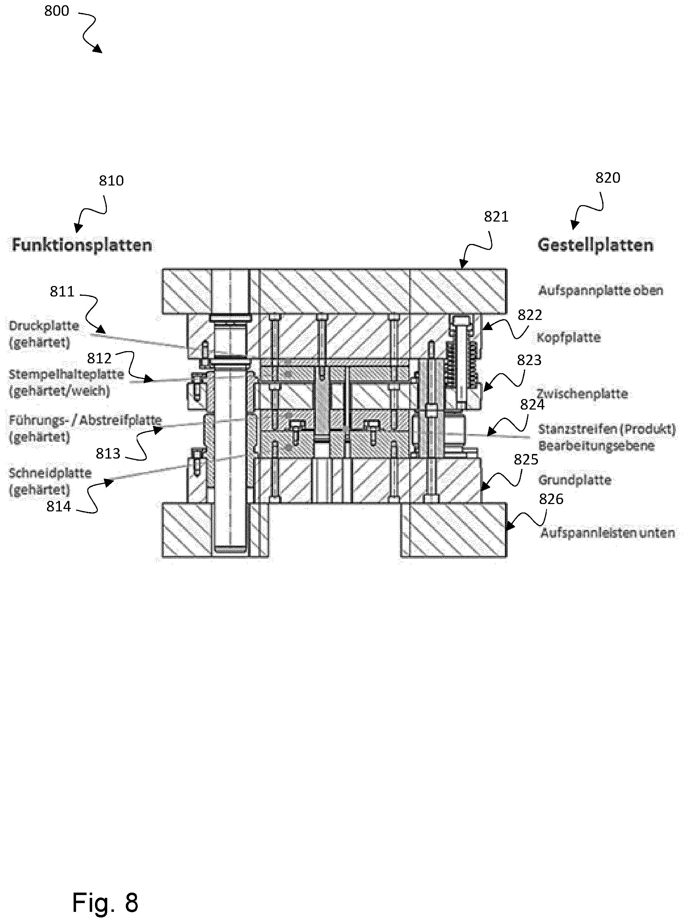

In der folgenden Beschreibung wird auf Stanzprozesse und Stanzwerkzeuge Bezug genommen. Stanzen ist ein Trennverfahren zur Fertigung von Stanzteilen aus verschiedenen Werkstoffen, wie z.B. Blechen, Pappe, Textilien, etc. mit einer Stanzpresse oder durch Schlag mit einem Hammerkopf auf ein Schneidwerkzeug. Ein Stanzwerkzeug besteht aus dem Stempel, der die Innenform darstellt, und der Matrize, die eine entsprechend passende Öffnung aufweist. Der Stempel ist in der Regel im Oberteil/Unterteil verbaut. Figur 8 zeigt ein Beispiel eines Stanzwerkzeugs. Beim Hochleistungsstanzen sind Prozesse, wie Schweißen, Bördeln, Nieten und Umformen, in spezielle Folgeverbundwerkzeuge integriert. Solche Folgeverbundwerkzeuge besitzen neben Stanzstationen meistens auch Biegestationen und weitere Verarbeitungsstationen. Diese teilweise hochkomplizierten Werkzeuge gilt es effektiv einzusetzen und wirkungsvoll zu schützen.

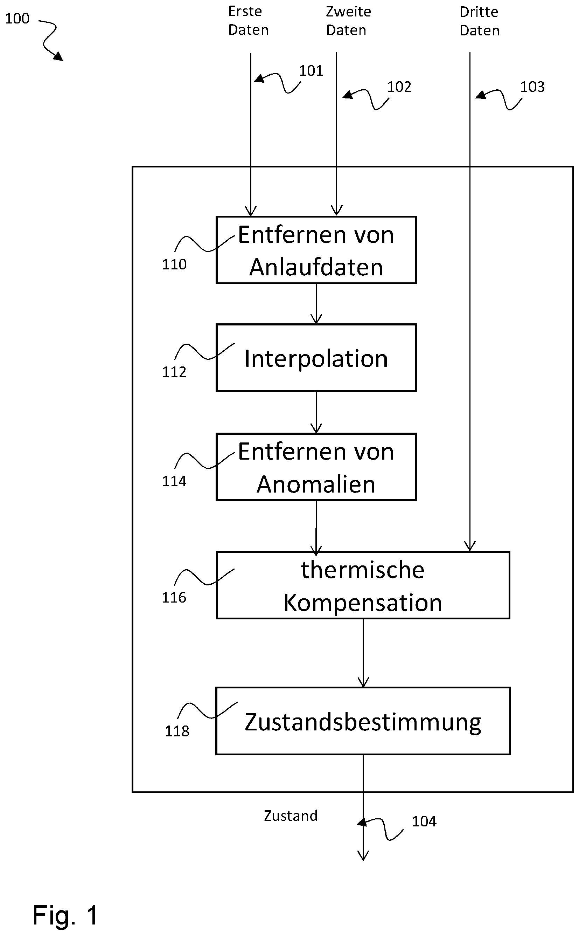

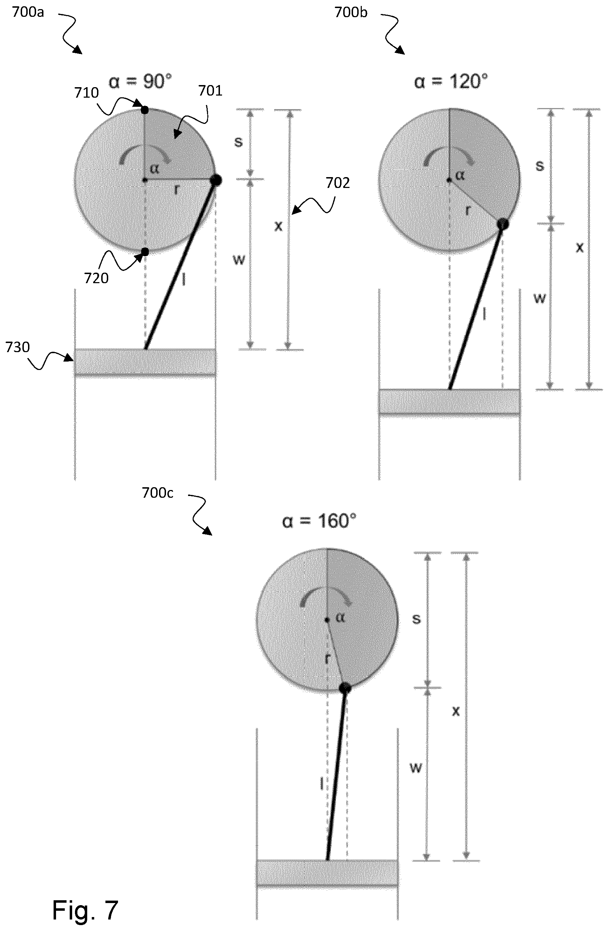

Fig. 1 zeigt eine schematische Darstellung einer Vorrichtung 100 zur Zustandsbestimmung eines Stanzprozesses gemäß der Offenbarung. Die Vorrichtung 100 eignet sich zur Zustandsbestimmung eines Stanzprozesses, bei dem ein Stanzwerkzeug 730, 800, wie beispielsweise in den Figuren 7 und 8 dargestellt, zum Stanzen eines Werkstoffs periodisch von einer Ausgangsstellung 710 in eine Endstellung 710 (siehe Figur 7) bewegt wird.

Die Vorrichtung 100 ist ausgebildet, erste Daten 101 zu erhalten, welche eine Kraft anzeigen, die bei dem Bewegen des Stanzwerkzeugs von der Ausgangsstellung in die Endstellung über eine Mehrzahl von Perioden des Stanzprozesses durch das Stanzwerkzeug auf den Werkstoff ausgeübt wird. Die Kraft, die hier als Pseudo-Kraft bezeichnet wird, resultiert aus den Schwingungen und elastischen Verbiegungen, welche beim Stanzprozess auf das Stanzwerkzeug einwirkt.

Die Vorrichtung 100 ist ausgebildet, zweite Daten 102 zu erhalten, welche einen Winkel oder einen Weg anzeigen, die das Stanzwerkzeug bei dem Bewegen von der Ausgangsstellung in die Endstellung über die Mehrzahl von Perioden des Stanzprozesses zurückgelegt hat.

Die Vorrichtung 100 ist ausgebildet, dritte Daten 103 zu erhalten, welche eine Temperatur des Stanzwerkzeugs über die Mehrzahl von Perioden des Stanzprozesses anzeigen.

Die Vorrichtung 100 ist ausgebildet, aus den ersten Daten 101 und den zweiten Daten 102 Anlaufdaten zu entfernen 110, welche während Perioden einer Inbetriebnahme des Stanzwerkzeugs erfasst wurden.

Die Vorrichtung 100 ist ausgebildet, die ersten Daten 101 und die zweiten Daten 102 zu interpolieren 112, um eine einheitliche Länge und Schrittweite der zweiten Daten 102 in Bezug auf die ersten Daten 101 für die Mehrzahl von Perioden des Stanzprozesses zu erhalten.

Die Vorrichtung 100 ist ausgebildet, Anomalien in den ersten Daten 101 und zweiten Daten 102 zu erkennen und zu entfernen 114.

Die Vorrichtung 100 ist ausgebildet, einen thermischen Störeinfluss der dritten Daten 103 auf die ersten Daten 101 und zweiten Daten 102 zu bestimmen und zu kompensieren 116.

Die Vorrichtung 100 ist ausgebildet, den Zustand des Stanzprozesses basierend auf den um den thermischen Störeinfluss kompensierten ersten Daten 101 und zweiten Daten 102 zu bestimmen 116.

Die Vorrichtung kann beispielsweise eine elektronische Schaltung umfassen oder einen Prozessor oder Controller zum Ausführen der oben angegebenen Funktionen. Hierbei kann es sich um eine numerische Steuerung zur Steuerung des Stanzprozesses handeln oder um einen separaten Prozessor oder Computer, auf dem die oben dargestellten Funktionen ausgeführt werden können.

Bei der Bestimmung des Zustands des Stanzprozesses kann es sich beispielsweise um einen Verschleißzustand des Stanzwerkzeugs handeln, basierend auf dem Aussagen über einen Wartungszeitpunkt des Stanzwerkzeugs getroffen werden können.

Die ersten Daten 101 zeigen beispielsweise die Kraft mittels einer Verbiegung oder Verformung des Stanzwerkzeugs 730, 800 an, welche aufgrund des Stanzprozesses auf das Stanzwerkzeug 730, 800 einwirkt.

Die ersten Daten 101 können beispielsweise Sensordaten von Piezosensoren sein, die in dem Stanzwerkzeug 730, 800 platziert sind.

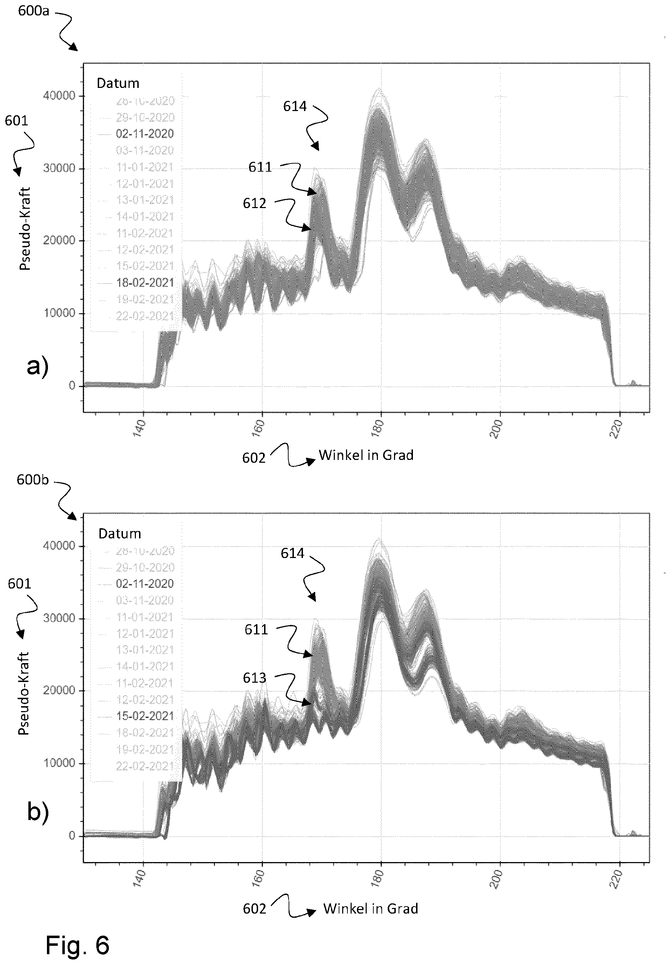

Die zweiten Daten 102 können eine Winkelinformation 602, 701 eines Drehgebers des Stanzwerkzeugs umfassen, wie beispielsweise in den Figuren 6 und 7 dargestellt, insbesondere eine Winkelinformation 701 eines Exzenters einer Exzenterpresse 700a, 700b, 700c. Alternativ können die zweiten Daten 102 eine Weginformation 702 eines Weggebers des Stanzwerkzeugs umfassen, insbesondere eine Weginformation eines Kolbens einer Hydraulikpresse.

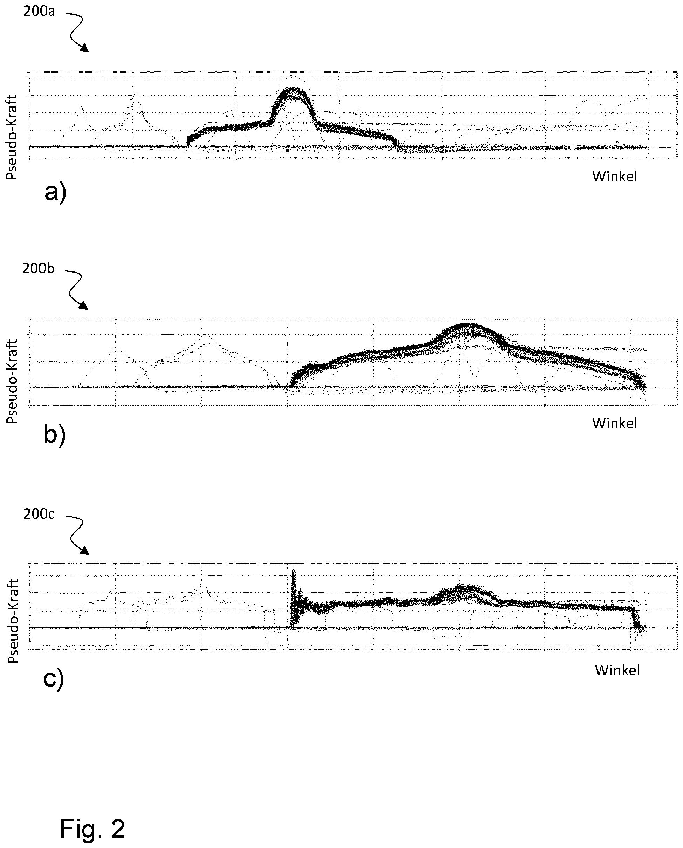

Die ersten Daten 101 und die zweiten Daten 102 können Kraft-Winkel-Kurven umfassen, beispielsweise Kraft-Winkel-Kurven 200a, 200b, 200c, wie in Figur 2 dargestellt. Die Vorrichtung 100 kann ausgebildet sein, die Anlaufdaten basierend auf einer Abweichung einer Form der Kraft-Winkel-Kurven 200a, 200b, 200c während den Perioden der Inbetriebnahme des Stanzwerkzeugs gegenüber einer Form der Kraft-Winkel-Kurven 200a, 200b, 200c nach den Perioden der Inbetriebnahme des Stanzwerkzeugs zu bestimmen, wie beispielsweise in den Figuren 2a/b/c dargestellt.

Die Vorrichtung 100 kann ausgebildet sein, die Anlaufdaten basierend auf einer Verschiebung der Kraft-Winkel-Kurven 200a, 200b, 200c, wie beispielsweise in den Figuren 2a/b/c dargestellt, während den Perioden der Inbetriebnahme des Stanzwerkzeugs in Richtung der Kraft zu bestimmen.

Die Vorrichtung 100 kann ausgebildet sein, Kraft-Winkel-Kurven 200a, 200b, 200c aus den ersten Daten 101 und den zweiten Daten 102 zu entfernen, welche bei einer Hubzahl des Stanzprozesses erzeugt wurden, die niedriger als ein fester Prozentsatz einer Nennhubzahl des Stanzprozesses ist.

Die Vorrichtung 100 kann ausgebildet sein, die ersten Daten 101 und die zweiten Daten 102 pro erfasster Periode des Stanzprozesses um einen oder mehrere Null-Einträge zu erweitern bis die zweiten Daten 102 eine einheitliche Länge und Schrittweite in Bezug auf die ersten Daten 101 aufweisen.

Die ersten Daten 101 und die zweiten Daten 102 können Kraft-Winkel-Kurven 300a, 300b, 300c umfassen, wie beispielsweise in den Figuren 3a/b/c dargestellt. Die Vorrichtung 100 kann ausgebildet sein, aus den Kraft-Winkel-Kurven 300a, 300b, 300c eine Referenzkurve durch Mittelwertbildung zu erzeugen und eine Anomalie basierend auf einer Abweichung der Kraft-Winkel-Kurven 300a, 300b, 300c zu der Referenzkurve zu bestimmen.

Die Abweichung kann beispielsweise auf einem Produkt einer Standardabweichung der Kraft-Winkel-Kurven 300a, 300b, 300c und einem einstellbaren Faktor basieren, wie zu Figur 3 näher beschrieben.

Die ersten Daten 101 und die zweiten Daten 102 können in verschiedene Kanäle unterteilt sein, wobei ein jeweiliger Kanal erste 101 und zweite 102 Daten umfassen kann, die mit einem entsprechenden Piezo-Sensor an dem Stanzwerkzeug aufgezeichnet wurden.

Die Vorrichtung 100 kann ausgebildet sein, bei Erkennen einer Anomalie in der Kraft-Winkel-Kurve 300a, 300b, 300c, wie beispielsweise in den Figuren 3a/b/c dargestellt, eines der verschiedenen Kanäle auch die entsprechenden Kraft-Winkel-Kurven 300a, 300b, 300c der anderen Kanäle als abnormal zu markieren.

Die Vorrichtung 100 kann ausgebildet sein, eine Kompensationsfunktion für den thermischen Einfluss 400 der dritten Daten 103 auf die ersten Daten 101 und die zweiten Daten 102 zu bestimmen, wie beispielsweise zu Figur 4 näher beschrieben.

Die Kompensationsfunktion kann beispielsweise eine Polynomfunktion zweiter Ordnung oder eine e-Funktion ist, die sich wie folgt darstellen lassen:

$$F(\vartheta)_{comp} = a \cdot \vartheta^2 + b \cdot \vartheta + c$$

$$F(\vartheta)_{comp} = -a \cdot e^{b \cdot \vartheta + c} + d$$

,

wie beispielsweise zu Figur 4 näher beschrieben, wobei • die Temperatur darstellt und die Parameter a, b, c und d vorgegeben sind.

Die Vorrichtung 100 kann ausgebildet sein, die Kompensationsfunktion für jeden einzelnen Winkel zu bestimmen und den thermischen Störeinfluss 400 der dritten Daten 103 auf die ersten Daten 101 und zweiten Daten 102 für jeden einzelnen Winkel zu kompensieren, wie beispielsweise zu Figur 4 näher beschrieben.

Fig. 2a/b/c zeigen drei beispielhafte Darstellungen erfasster Kraft-Winkel-Kurven 200a, 200b, 200c für drei Kanäle des Stanzprozesses. Figur 2a/b/c stellen die ursprünglich erfassten Kraft-Winkel-Kurven 200a, 200b, 200c dar, welche den ersten Daten 101 und den zweiten Daten 102 gemäß Figur 1 entsprechen. Das Entfernen von Anlaufdaten 110, wie oben zu Figur 1 beschrieben, bezieht sich beispielsweise auf Kraft-Winkel-Kurven 200a, 200b, 200c wie in Figur 2a/b/c dargestellt.

In dem Beispiel der Figur 2a/b/c wurden drei Piezosensoren eingesetzt. Dementsprechend werden über drei Kanäle die Kraft-Winkel-Kurven bereitgestellt. Die Kraft-Winkel-Kurve 200a stellt den ersten Kanal dar, die Kraft-Winkel-Kurven 200b den zweiten Kanal und die Kraft-Winkel-Kurven 200c den dritten Kanal.

Aus den dargestellten Kraft-Winkel-Kurven 200a, 200b, 200c ist zu erkennen, dass die Rohdaten zahlreiche Kurven enthalten, die weder einen Produktionsfehler noch ein Verschleißverhalten darstellen. Während der Inbetriebnahme (Anstanzvorgang) eines Stanzwerkzeugs bedient der Maschinenbediener die Maschine manuell und kann stationsweise kontrollieren, ob der Blechstreifen in der richtigen Position ist und ob sich evtl. Fremdkörper im Werkzeug befinden. Messungen, die in dieser Phase aufgezeichnet wurden, sind in Figur 2a durch die X-Verschiebung (gegenüber den Messungen der Figuren 2b und 2c) und die andersartige Form zu identifizieren. Beispielsweise ist die Erhöhung bzw. Kuppel in der Mitte der Messkurve 200a stärker ausgeprägt als bei den Messkurven 200b, 200c. Das Entfernen dieser Daten bildet den ersten Schritt der Datenreinigung bzw. Entfernen von Anlaufdaten 110, wie in Figur 1 beschrieben.

Ferner können alle Kurven, die bei einer Hubzahl des Stanzwerkzeugs erzeugt wurden, die niedriger als ein fester Prozentsatz der Nennhubzahl des Stanzwerkzeugs ist, vom Datensatz entfernt werden.

Um mathematische Methoden anwenden zu können, sollten die Messreihen 200a, 200b, 200c als Matrix interpretiert werden können. Dies ist allerdings nur möglich, sofern die Messreihen eine identische Länge aufweisen. Abhilfe schafft eine Interpolation 112 der Daten, wie oben zu Figur 1 beschrieben.

Dazu werden zunächst die Messreihen 200a, 200b, 200c um mehrere Null-Einträge erweitert, sodass eine Interpolation zwischen den fest definierten Grenzen für alle Messreihen möglich ist. Die anschließende Interpolation 112 bewirkt, dass die Messreihen eine einheitliche Länge und Schrittweite aufweisen. Somit können die Messreihen der Körperschallwerte auch ohne Winkelangaben miteinander verglichen werden.

Fig. 3a/b/c zeigen drei beispielhafte Darstellungen der von Anlaufdaten bereinigten Kraft-Winkel-Kurven 300a, 300b, 300c für drei Kanäle des Stanzprozesses.

Zum automatischen Erkennen von Anomalien können neben "Machine Learning" Algorithmen (maschinelle Lernalgorithmen) wie beispielsweise der "Local Outlier Factor" oder die "One-Class Support Vector Machine" und "Deep Learning" Algorithmen wie der Autoencoder auch simplere mathematische Methoden verwendet werden. Für den Datensatz 300a, 300b, 300c werden beispielsweise mehrere Referenzkurven durch Mittelwertbildung generiert. Ist die Differenz zwischen den Kraft-Winkel-Kurven 300a, 300b, 300c und der jeweiligen Referenzkurve größer als eine vordefinierte Grenze, so kann eine Anomalie erkannt werden. Die Grenze ist beispielsweise durch das Produkt der Standardabweichung • • • und einen zu bestimmenden Faktor • ••• •• • • definiert. Der Faktor kann von einem Experten so angepasst werden, bis das gewünschte Resultat sich einstellt und alle Produktionsfehler zuverlässig erkannt werden können.

Der Median eignet sich beispielsweise besser als Referenz als der arithmetische Mittelwert, da Ausreißer auf den Median einen wesentlich geringeren Einfluss haben.

Werden mehrere Körperschallsignale betrachtet, so kann man diese in einer Matrixdarstellung wie folgt darstellen:

$$\mathbf{X} = \begin{pmatrix} x_{1,1} & x_{1,2} & \cdots & x_{1,j} & \cdots & x_{1,n} \\ x_{2,1} & x_{2,2} & \cdots & x_{2,j} & \cdots & x_{2,n} \\ \vdots & \vdots & \ddots & \vdots & \ddots & \vdots \\ x_{i,1} & x_{i,2} & \cdots & x_{i,j} & \cdots & x_{i,n} \\ \vdots & \vdots & \ddots & \vdots & \ddots & \vdots \\ x_{m,1} & x_{m,2} & \cdots & x_{m,j} & \cdots & x_{m,n} \end{pmatrix} \quad \text{mit} \quad i \in \mathbb{N}, 1 \le i \le m \text{ und } j \in \mathbb{N}, 1 \le j \le n$$

Die Anzahl der Körperschallsignale wird durch • und die Anzahl der Messpunkte durch • wiedergegeben. Das Referenzsignal stellt ebenfalls einen Zeilenvektor dar, dessen Einträge mit dem Median der Spalten von X errechnet werden können.

Die Formel zum Detektieren von Anomalien kann beispielsweise wie folgt angegeben werden:

$$\vec{x}_{diff} = \vec{x}_{ref} - \vec{x}_{act}$$

$$\vec{x}_{act} \triangleq \begin{cases} \text{normal} & \text{falls } \{\forall\, x_{diff,j} \in \mathbb{R} \,|\, |x_{diff,j}| < \sigma * f_{limit}\} & \text{mit } j \in \mathbb{N}, 1 \le j \le n \\ \text{Anomalie} & \text{falls } \{\exists\, x_{diff,j} \in \mathbb{R} \,|\, |x_{diff,j}| \ge \sigma * f_{limit}\} & \text{mit } j \in \mathbb{N}, 1 \le j \le n \end{cases}$$

Ein Hubvorgang kann beispielsweise bei der Verwendung von drei Piezosensoren durch drei Kraft-Winkel-Kurven definiert werden. Sobald eine Kraft-Winkel-Kurve eines Kanals als Anomalie deklariert wird, können die dazugehörigen Kraft-Winkel-Kurven der anderen Kanäle daher ebenfalls als abnormal markiert werden.

Fig. 4 zeigt eine beispielhafte Darstellung der Pseudo-Kraft 400 über der Zeit für Messungen an zwei verschiedenen Tagen 401, 402 ohne Kompensation des thermischen Einflusses.

Die Messungen der Pseudo-Kraft 400 zeigen, dass die Kraft-Winkel-Kurven, wie oben zu den Figuren 2 und 3 dargestellt, einem starken thermischen Einfluss unterliegen. Das Diagramm 400 in Figur 4 stellt den Verlauf des Maximalwerts der Kraft-Winkel-Kurven dar. Entgegen den Erwartungen ist kein Anstieg des Wertes über die Zeit zu entnehmen. Damit der Verschleiß sichtbar wird, kann aus Figur 4 abgeleitet werden, dass eine Kompensation der Störgröße erforderlich ist. Dies wird nachfolgend beschrieben.

Wie gesagt, zeigt Figur 4 eine beispielhafte Darstellung der Temperatureffekte bei der Bestimmung der Kraft-Winkel-Kurven, wie oben in den Figuren 2 und 3 dargestellt. Das Diagramm 400 stellt die Pseudo-Kraft bzw. das Messsignal eines Piezo-Sensors über der Zeit dar. Es sind zwei Messverläufe 401, 402 dargestellt, wobei der erste Messverlauf 401 an einem ersten Tag aufgenommen wurde und der zweite Messverlauf 402 an einem zweiten Tag.

Auffällig ist, dass die Kurven 401, 402 mit der Zeit abnehmen. Bei einer Unterbrechung zwischen zwei Messpunkten erhöht sich der Maximalwert im Vergleich zum vorherigen. Es wird angenommen, dass die Kurven hauptsächlich von der Temperatur des Stanzwerkzeugs beeinflusst werden.

Aus der Darstellung der Figur 4 ergibt sich als Schlussfolgerung, dass die Kompensation temperaturbedingter Einflüsse zwingend erforderlich ist, um die Ermüdung des Stanzwerkzeugs sichtbar zu machen.

Hierzu kann eine Funktion verwendet werden, welche die Erwärmung des Stanzwerkzeugs aufgrund der Tatsache, dass es viele Messungen während des Erwärmungsprozesses gibt, berücksichtigt.

Die in Figur 1 beschriebene Vorrichtung 100 berücksichtigt das Temperaturverhalten des Stanzprozesses. Die Vorrichtung 100 nutzt eine solche Funktion, welche die Temperatureffekte im Verlaufe des Stanzprozesses kompensiert.

Hierzu können zwei allgemeine Gleichungen betrachtet werden, um eine Kompensationsfunktion für den thermischen Einfluss zu bestimmen. Die erste ist eine Polynomfunktion mit der Ordnung zwei und die zweite ist eine e-Funktion:

$$F(\vartheta)_{comp} = a \cdot \vartheta^2 + b \cdot \vartheta + c$$

$$F(\vartheta)_{comp} = -a \cdot e^{b \cdot \vartheta + c} + d$$

Beide Funktionen eignen sich zur Annäherung an eine Kompensationsfunktion. Nachdem eine Kompensationsfunktion bestimmt wurde, kann die Kompensation des thermischen Einflusses wie folgt bestimmt werden:

$$F_{corr,\vartheta_{act}} = F_{meas,\vartheta_{act}} + \Delta_{comp} \quad mit \begin{cases} \Delta_{comp} > 0 & für \quad \vartheta_{act} > \vartheta_{ref} \\ \Delta_{comp} < 0 & für \quad \vartheta_{act} < \vartheta_{ref} \end{cases}$$

$$\Delta_{comp} := F(\vartheta_{act}) - F(\vartheta_{ref})$$

Die so ermittelte Kompensation des thermischen Einflusses kann zur Zustandsbestimmung 118 des Stanzprozesses genutzt werden, wie oben zu Figur 1 beschrieben, um beispielsweise das Verschleißverhalten bzw. die Ermüdung des Stanzwerkzeugs zu bestimmen.

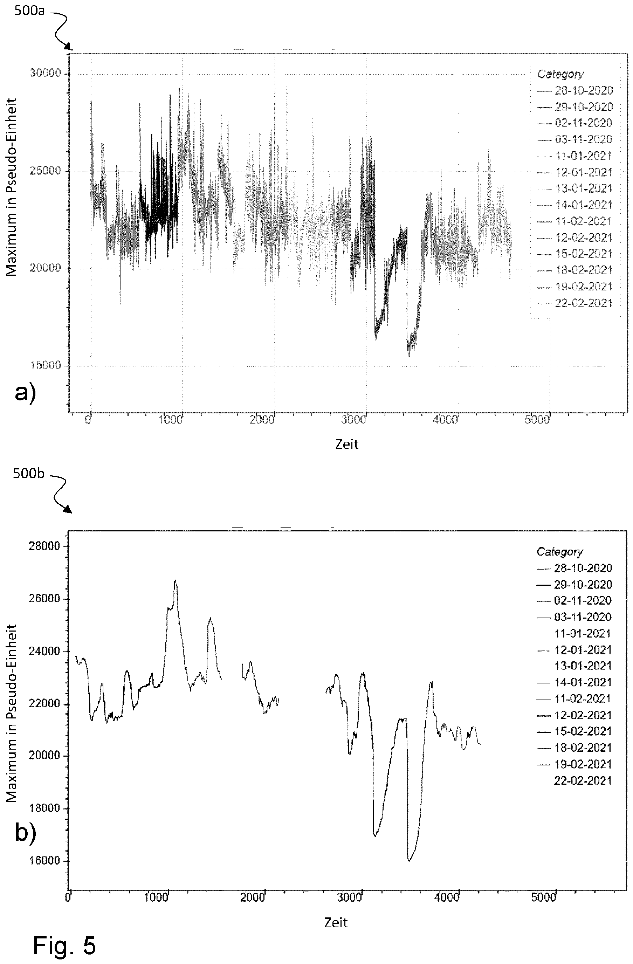

Fig. 5a/b zeigen eine beispielhafte Darstellung der Pseudo-Kraft (500a ohne Glättungsfilter bzw. 500b mit Glättungsfilter) über der Zeit für Messungen über mehrere Monate mit Kompensation des thermischen Einflusses.

In den Diagrammen 500a und 500b ist der thermische Einfluss bereits kompensiert, beispielsweise mittels der oben zu Figur 4 beschriebenen Mechanismen.

In Figur 5a werden die Maximalwerte des ersten markanten Peaks chronologisch dargestellt. Die dabei betrachteten Datenpunkte liegen zwischen einem Winkel von 166 und 174 Grad. Mit steigendem Verschleiß ist ein fallender Trend der Werte ersichtlich. Nach erfolgter Wartung steigen die Maximalwerte wieder moderat an.

In Figur 5b ist ein Glättungsfilter auf die Daten der Figur 5a angewandt. Die Maximalwerte der Figur 5a sind mittels eines gleitenden Mittelwerts geglättet, wobei jeweils 50 Werte zusammengefasst sind.

Fig. 6a/b zeigen zwei beispielhafte Darstellungen der Kraft-Winkel-Kurven 600a, 600b nach Aufbereitung der erfassten Zustandsgrößen gemäß der Offenbarung. Die Zustandsgrößen wurden entsprechend der Beschreibung zu den Figuren 1 bis 5 aufbereitet, d.h. mittels Entfernens von Anlaufdaten 110, Interpolation 112, Entfernen von Anomalien 114 und thermischer Kompensation 116.

Das Diagramm 600a zeigt die erfassten Kraftdaten (entsprechend den aufbereiteten ersten Daten 101 aus Figur 1) in Bezug zu den erfassten Winkeldaten (entsprechend den aufbereiteten zweiten Daten 102 aus Figur 1). Das Diagramm 600b zeigt den daraus bestimmbaren Zustand des Stanzprozesses.

Die beiden Diagramme 600a, 600b zeigen jeweils als Kurvenschar über zwei Tage, wobei der erste Tag (02.11.2020) am Anfang des Messzeitraums liegt und der letzte Tag (15.02.2020) am Ende des Messzeitraums. Der Messzeitraum erstreckt sich also über mehrere Monate. In dem Diagramm 600a der Figur 6a sind die Kraft-Winkel Kurven des ersten Tages (02.11.2020) als erste Kurvenschar 611 dargestellt und die Kraft-Winkel Kurven des letzten Tages (15.02.2020) als zweite Kurvenschar 612. Die Messung wurde aufgrund des ausgeprägten Verschleißes am letzten Tag (15.02.2020) abgebrochen. Vergleicht man die beiden Kurvenscharen 611 und 612, so ist zu sehen, dass der erste markante Peak 614 bei der zweiten Kurvenschar 612 Änderungen in Form und Ausprägung verzeichnet.

Das untere Diagramm 600b zeigt die gleiche erste Kurvenschar 611 vom ersten Tag (02.11.2020) und eine dritte Kurvenschar 613 vom letzten Tag (15.02.2020) der Messung, die aber erst nach erfolgter Wartung aufgenommen wurde. Hier ist zu erkennen, dass nach erfolgter Wartung der erste markante Peak 614 wieder sichtbar ist. Die Reduktion des Peaks 614 stellt folglich eine verschleißbedingte Erscheinung dar.

Mit der entsprechenden Sensorik können unter anderem eine Pseudokraft 601 und der Winkel 602, 701 des Exzenters, wie in Figur 7 näher dargestellt, erfasst werden. Da der Winkel 701 in Relation zum vom Werkzeugoberteil zurückgelegten Weg steht, enthält die Fläche der Kraft-Winkel-Kurve Informationen zur mechanischen Arbeit, die beim Stanzen notwendig ist. Es wird angenommen, dass aufgrund des Stumpfwerdens der Schneidelemente die notwendige mechanische Arbeit $W_{mech}$ mit voranschreitendem Verschleiß ansteigt. Bei einer Messung der Kräfte, die auf die Schneidelemente einwirken, kann eine solche Beziehung ermittelt werden. Eine Wartung des Werkzeugs und ein damit verbundenes Schleifen der Schneidelemente bewirkt eine Reduktion der für das Austrennen des Stanzteils notwendigen mechanischen Arbeit.

Bislang werden die Werkzeuge nach statischen Intervallen gewartet. Unvorhersehbare Geschehnisse wie beispielsweise ein hochkommender Butzen, d.h. ein vom Blech ausgetrennter Abschnitt, ein Bedienfehler oder ein abreißender Schmierfilm können sich nachteilig auf die Standzeit eines Werkzeugs auswirken, sodass noch innerhalb des definierten Wartungsintervalls die physikalische Grenze des Werkzeugs erreicht werden kann. Ist dies der Fall, so kommt es im schlimmsten Fall zum Bruch der Schneidelemente.

Mithilfe von maschinellen Lernverfahren ("Machine-Learning Methoden") können die Kraft-Winkel-Kurven, wie in den Diagrammen 600a, 600b dargestellt, für die Zustandsbestimmung verwendet werden. Maschinelles Lernen ist ein Oberbegriff für die "künstliche" Generierung von Wissen aus Erfahrung: Ein künstliches System lernt aus Beispielen und kann diese nach Beendigung der Lernphase verallgemeinern. Dazu bauen Algorithmen beim maschinellen Lernen ein statistisches Modell auf, das auf Trainingsdaten beruht. Das heißt, es werden nicht einfach die Beispiele auswendig gelernt, sondern Muster und Gesetzmäßigkeiten in den Lerndaten erkannt, so dass das System auch unbekannte Daten beurteilen kann.

Des Weiteren können zusätzliche KI (Künstliche Intelligenz)- Modelle zum Erkennen und Klassifizieren von Fehlerzuständen genutzt werden. Der zukünftige Verlauf kann im einfachsten Fall über eine lineare Funktion approximiert werden. Sofern es die Datenlage jedoch zulässt, kann ein Regressionsmodell herangezogen werden, um die Vorhersagegenauigkeit zu erhöhen.

Mit den in Figur 6 dargestellten Daten können Informationen über die Ermüdung bzw. den Verschleiß des Stanzwerkzeugs erhalten werden. Der aufgezeichnete Winkel 602 bezieht sich auf den Abstand, den die Oberseite des Stanzwerkzeugs zurücklegen muss. Daher enthält die Oberfläche unter der Kraft-Winkel-Kurve Informationen über die mechanische Arbeit • • •••, die beim Stanzen notwendig ist. Es wird angenommen, dass • •••• mit zunehmender Ermüdung zunimmt. Nach erfolgter Wartung sollte • • ••• wieder am Anfangswert sein.

Derzeit werden statische Wartungsintervalle verwendet, die bei unerwarteten Ereignissen wie z.B. Unfall oder Verschmutzung nicht ordnungsgemäß funktionieren. In diesem Fall könnte das Stanzwerkzeug in einem bereits kritischen Zustand sein. Wenn der Arbeiter dann die Produktion fortsetzt, wird das Werkzeug beschädigt oder es kann zerstört werden. Mit einem Modell für maschinelles Lernen kann eine Regression durchgeführt werden, um abzuschätzen, wie die wahrscheinlichste Entwicklung von • • ••• aussehen wird. Mit diesen Informationen in Kombination mit dem Wissen über die physikalische Grenze kann die Restlebenszeit des Stanzwerkzeugs vorhergesagt werden. Wenn die historischen Daten Kurven enthalten, die Brüche anzeigen, können Informationen über die physikalische Grenze zugänglich gemacht werden.

Fig. 7 zeigt eine beispielhafte Darstellung der Zustände 700a, 700b, 700c eines Stanzprozesses am Beispiel einer Exzenterpresse.

In Figur 7 ist ein Stanzwerkzeug 730 am Beispiel einer Exzenterpresse dargestellt. Das Stanzwerkzeug 730 wird zum Stanzen eines Werkstoffs periodisch von einer Ausgangsstellung 710 in eine Endstellung 710 bewegt, welche aufgrund der Periodizität des Stanzprozesses mit der Ausgangsstellung 710 übereinstimmt. In der Darstellung 700a befindet sich das Stanzwerkzeug 730 in einer ersten Stellung, bei der es einen Winkel 701 von • =90° einnimmt, was einem Weg x 702 entspricht. In der Darstellung 700b befindet sich das Stanzwerkzeug 730 in einer zweiten Stellung, bei der es einen Winkel 701 von • =120° einnimmt, was einem Weg x 702 entspricht. In der Darstellung 700c befindet sich das Stanzwerkzeug 730 in einer dritten Stellung, bei der es einen Winkel 701 von • =160° einnimmt, was einem Weg x 702 entspricht.

Das Stanzwerkzeug 730 wird periodisch zwischen einer Ausgangsstellung 710 (die hier nur angedeutet ist) über eine Zwischenstellung 720 (die hier nur angedeutet ist), auch als unterer Totpunkt bezeichnet, in eine Endstellung 710, welche wieder der Anfangsstellung 710 entspricht, bewegt, um das Stanzen zu ermöglichen. Die Anfangsstellung 710 entspricht einem Winkel 701 von • =0°, die Zwischenstellung 720 entspricht einem Winkel 701 von • =180° und die Endstellung 710 entspricht wieder einem Winkel 701 von • =0°.

Zu Beginn wurde erwähnt, dass die mechanische Arbeit zunehmen sollte, wenn die Ermüdung zunimmt. Zur Bestimmung einer Näherung der mechanischen Arbeit wird im Folgenden eine Formel angegeben, welche auf der Systematik eines Exzenters basiert, wie in Figur 7 dargestellt.

Die Formel für die mechanische Arbeit • • ••• in Abhängigkeit vom Winkel • kann näherungsweise wie folgt berechnet werden:

$$W_{mech}(\alpha) = \int \left( F_N(\alpha) \cdot x(\alpha) \right) d\alpha$$

$$W_{mech}(\alpha) = \int \left( F_N(\alpha) \cdot \left( s(\alpha) + w(\alpha) \right) \right) d\alpha$$

$$W_{mech}(\alpha) = \int \left( F_N(\alpha) \cdot \left( r \cdot (1 - \cos(\alpha)) + \sqrt{l^2 - (\sin(\alpha) \cdot r)^2} \right) \right) d\alpha$$

$$W_{mech,discrete}(\alpha) = \sum_{i=1}^{n} F_{N,i}(\alpha_i) \cdot \left( r \cdot (1 - \cos(\alpha_i)) + \sqrt{l^2 - (\sin(\alpha_i) \cdot r)^2} \right)$$

Hierbei wurden nur geometrische Aspekte berücksichtigt, d.h. die Eigenschaften rotierender Massen wurden in dieser Näherung nicht berücksichtigt.

Mit der so bestimmten mechanischen Arbeit kann das Verschleißverhalten bzw. die Ermüdung des Stanzwerkzeugs ermittelt werden. Die so ermittelte mechanische Arbeit kann auch eine Zustandsgröße 104 des Stanzprozesses sein, wie oben zu Figur 1 beschrieben. Mit dieser Zustandsgröße kann auch ein Verschleißzustand und/oder ein Wartungszeitpunkt des Stanzwerkzeugs bestimmt werden, wie oben zu Figur 1 in dem Block "Zustandsbestimmung" 118 dargestellt.

Fig. 8 zeigt eine beispielhafte Darstellung eines Stanzwerkzeugs 800 gemäß der Offenbarung.

Das Stanzwerkzeug ist vielschichtig aufgebaut und umfasst Funktionsplatten 810 und Gestellplatten 820. Die Gestellplatten 820 umfassen untere Aufspannleisten 826, auf denen die Grundplatte 825 angeordnet ist. Auf der Grundplatte 825 sind die Stanzstreifen 824 des Produkts in der Bearbeitungsebene angeordnet. Darüber befindet sich eine Zwischenplatte 823, auf der Zwischenplatte 823 ist die Kopfplatte 822 angeordnet und über der Kopfplatte 822 die obere Aufspannplatte 821.

Die Funktionsplatten 810 umfassen die gehärtete Schneidplatte 814, mit welcher das Schneiden ausgeführt wird. Darüber befindet sich die gehärtete Führungs-/Abstreifplatte 813. Beide Platten 814, 813 befinden sich zwischen der Zwischenplatte 823 und der Grundplatte 825. Über der Zwischenplatte 823 sind die gehärtete oder weiche Stempelhalteplatte 812 und darüber die gehärtete Druckplatte 811 angeordnet.

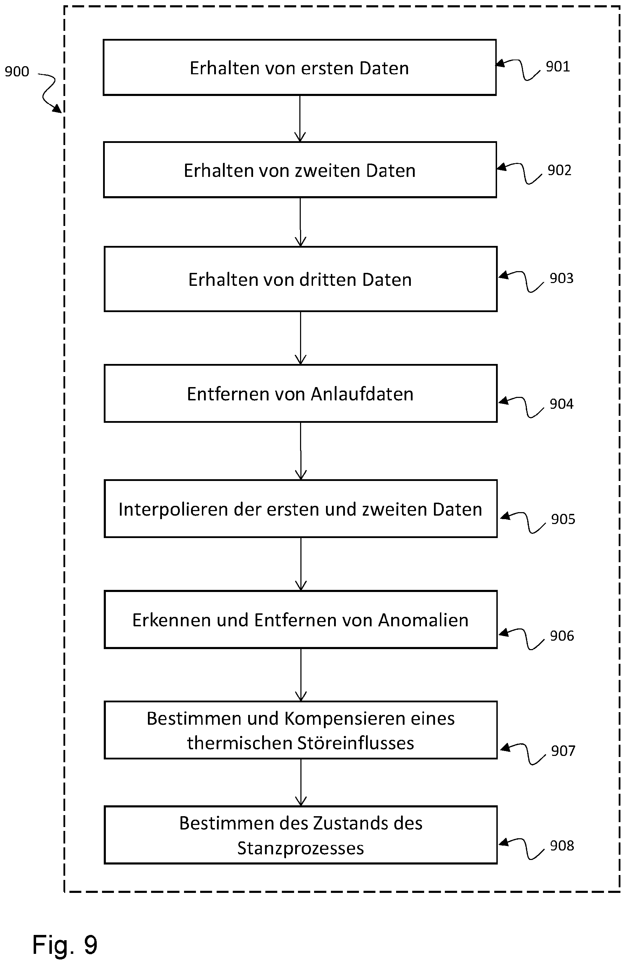

Fig. 9 zeigt eine schematische Darstellung eines Verfahrens 900 zur Zustandsbestimmung eines Stanzprozesses gemäß der Offenbarung.

Bei dem Stanzprozess wird ein Stanzwerkzeug 730, 800, wie oben zu den Figuren 7 und 8 beschrieben, zum Stanzen eines Werkstoffs periodisch von einer Ausgangsstellung 710 in eine Endstellung 710 bewegt.

Das Verfahren weist die folgenden Schritte auf:

Erhalten 901 von ersten Daten 101, welche eine Kraft anzeigen, die bei dem Bewegen des Stanzwerkzeugs von der Ausgangsstellung in die Endstellung über eine Mehrzahl von Perioden des Stanzprozesses durch das Stanzwerkzeug auf den Werkstoff ausgeübt wird, wie beispielsweise oben zu Figur 1 beschrieben;

Erhalten 902 von zweiten Daten 102, welche einen Winkel oder einen Weg anzeigen, die das Stanzwerkzeug bei dem Bewegen von der Ausgangsstellung in die Endstellung über die Mehrzahl von Perioden des Stanzprozesses zurückgelegt hat, wie beispielsweise oben zu Figur 1 beschrieben;

Erhalten 903 von dritten Daten 103, welche eine Temperatur des Stanzwerkzeugs über die Mehrzahl von Perioden des Stanzprozesses anzeigen, wie beispielsweise oben zu Figur 1 beschrieben;

Entfernen 904 von Anlaufdaten aus den ersten Daten 101 und den zweiten Daten 102, welche während Perioden einer Inbetriebnahme des Stanzwerkzeugs erfasst wurden, wie beispielsweise oben zu Figur 1 beschrieben;

Interpolieren 905 der ersten Daten 101 und der zweiten Daten 102, um eine einheitliche Länge und Schrittweite der zweiten Daten 102 in Bezug auf die ersten Daten 101 für die Mehrzahl von Perioden des Stanzprozesses zu erhalten, wie beispielsweise oben zu Figur 1 beschrieben;

Erkennen und Entfernen 906 von Anomalien in den ersten Daten 101 und zweiten Daten 102, wie beispielsweise oben zu Figur 1 beschrieben;

Bestimmen und Kompensieren 907 eines thermischen Störeinflusses der dritten Daten 103 auf die ersten Daten 101 und zweiten Daten 102, wie beispielsweise oben zu Figur 1 beschrieben; und

Bestimmen des Zustands 908 des Stanzprozesses basierend auf den um den thermischen Störeinfluss kompensierten ersten Daten 101 und zweiten Daten 102, wie beispielsweise oben zu Figur 1 beschrieben.

Die einzelnen Schritte des Verfahrens können den oben zu den Figuren 1 bis 8 beschriebenen Funktionen entsprechen.

**Bezugszeichenliste**

| | |
|---|---|
| 100 | Vorrichtung zur Zustandsbestimmung eines Stanzprozesses |
| 101 | erste Daten |
| 102 | zweite Daten |
| 103 | dritte Daten |
| 104 | Zustand des Stanzprozesses |
| 110 | Entfernen von Anlaufdaten |
| 112 | Interpolation |
| 114 | Entfernen von Anomalien |
| 116 | thermische Kompensation |
| 118 | Zustandsbestimmung |

200a/b/c     Kraft-Winkel-Kurven im Rohzustand

300a/b/c     Kraft-Winkel-Kurven, von Anlaufdaten bereinigt

| | |
|---|---|
| 400 | Messungen der Pseudo-Kraft über der Zeit |
| 401 | Messungen am Tag 1 |
| 402 | Messungen am Tag 2 |

| | |
|---|---|
| 500a | Messungen der Pseudo-Kraft über der Zeit ohne Glättungsfilter |
| 500b | Messungen der Pseudo-Kraft über der Zeit mit Glättungsfilter |

| | |
|---|---|
| 600a | Kraft-Winkel-Kurve |
| 600b | Kraft-Winkel-Kurve |
| 601 | Kraft bzw. Pseudokraft |
| 602 | Winkel |
| 611 | erste Kurvenschar |
| 612 | zweite Kurvenschar |
| 613 | dritte Kurvenschar |
| 614 | Peak bzw. Spitzenwert |

| | |
|---|---|
| 700a | erster Zustand eines Stanzprozesses am Beispiel einer Exzenterpresse |
| 700b | zweiter Zustand des Stanzprozesses |
| 700c | dritter Zustand des Stanzprozesses |
| 701 | Winkelinformation |
| 702 | Weginformation |
| 710 | Ausgangsstellung und Endstellung des Stanzwerkzeugs |
| 720 | Zwischenstellung des Stanzwerkzeugs |
| 730 | Stanzwerkzeug |

| | |
|---|---|
| 800 | Stanzwerkzeug |
| 810 | Funktionsplatten |

811 Druckplatte
812 Stempelhalteplatte
813 Führungs-/Abstreifplatte
814 Schneidplatte
820 Gestellplatten
821 Aufspannplatte oben
822 Kopfplatte
823 Zwischenplatte
824 Stanzstreifen (Produkt)
825 Grundplatte
826 Aufspannleisten unten

900 Verfahren zur Zustandsbestimmung eines Stanzprozesses
901 erster Verfahrensschritt
902 zweiter Verfahrensschritt
903 dritter Verfahrensschritt
904 vierter Verfahrensschritt
905 fünfter Verfahrensschritt
906 sechster Verfahrensschritt
907 siebenter Verfahrensschritt
908 achter Verfahrensschritt

**Patentansprüche**

1. Vorrichtung (100) zur Zustandsbestimmung eines Stanzprozesses, bei dem ein Stanzwerkzeug (730, 800) zum Stanzen eines Werkstoffs periodisch von einer Ausgangsstellung (710) in eine Endstellung (710) bewegt wird, wobei die Vorrichtung (100) ausgebildet ist,

   erste Daten (101) zu erhalten, welche eine Kraft anzeigen, die bei dem Bewegen des Stanzwerkzeugs von der Ausgangsstellung in die Endstellung über eine Mehrzahl von Perioden des Stanzprozesses durch das Stanzwerkzeug auf den Werkstoff ausgeübt wird;
   zweite Daten (102) zu erhalten, welche einen Winkel oder einen Weg anzeigen, die das Stanzwerkzeug bei dem Bewegen von der Ausgangsstellung in die Endstellung über die Mehrzahl von Perioden des Stanzprozesses zurückgelegt hat,
   dritte Daten (103) zu erhalten, welche eine Temperatur des Stanzwerkzeugs über die Mehrzahl von Perioden des Stanzprozesses anzeigen;
   aus den ersten Daten (101) und den zweiten Daten (102) Anlaufdaten zu entfernen (110), welche während Perioden einer Inbetriebnahme des Stanzwerkzeugs erfasst wurden;
   die ersten Daten (101) und die zweiten Daten (102) zu interpolieren (112), um eine einheitliche Länge und Schrittweite der zweiten Daten (102) in Bezug auf die ersten Daten (101) für die Mehrzahl von Perioden des Stanzprozesses zu erhalten;
   Anomalien in den ersten Daten (101) und zweiten Daten (102) zu erkennen und zu entfernen (114);
   einen thermischen Störeinfluss der dritten Daten (103) auf die ersten Daten (101) und zweiten Daten (102) zu bestimmen und zu kompensieren (116); und
   den Zustand des Stanzprozesses basierend auf den um den thermischen Störeinfluss kompensierten ersten Daten (101) und zweiten Daten (102) zu bestimmen (116).

2. Vorrichtung (100) nach Anspruch 1,
   wobei die ersten Daten (101) die Kraft mittels einer Verbiegung oder Verformung des Stanzwerkzeugs (730, 800) anzeigen, welche aufgrund des Stanzprozesses auf das Stanzwerkzeug (730, 800) einwirkt.

3. Vorrichtung (100) nach einem der vorstehenden Ansprüche,
   wobei die ersten Daten (101) Sensordaten von Piezosensoren sind, die in dem Stanzwerkzeug (730, 800) platziert sind.

4. Vorrichtung (100) nach einem der vorstehenden Ansprüche,

wobei die zweiten Daten (102) eine Winkelinformation (602, 701) eines Drehgebers des Stanzwerkzeugs umfassen, insbesondere eine Winkelinformation (701) eines Exzenters einer Exzenterpresse (700a, 700b, 700c); oder

wobei die zweiten Daten (102) eine Weginformation (702) eines Weggebers des Stanzwerkzeugs umfassen, insbesondere eine Weginformation eines Kolbens einer Hydraulikpresse.

5. Vorrichtung (100) nach einem der vorstehenden Ansprüche,

wobei die ersten Daten (101) und die zweiten Daten (102) Kraft-Winkel-Kurven (200a, 200b, 200c) umfassen, und

wobei die Vorrichtung (100) ausgebildet ist, die Anlaufdaten basierend auf einer Abweichung einer Form der Kraft-Winkel-Kurven (200a, 200b, 200c) während den Perioden der Inbetriebnahme des Stanzwerkzeugs gegenüber einer Form der Kraft-Winkel-Kurven (200a, 200b, 200c) nach den Perioden der Inbetriebnahme des Stanzwerkzeugs zu bestimmen.

6. Vorrichtung (100) nach Anspruch 5,
wobei die Vorrichtung (100) ausgebildet ist, die Anlaufdaten basierend auf einer Verschiebung der Kraft-Winkel-Kurven (200a, 200b, 200c) während den Perioden der Inbetriebnahme des Stanzwerkzeugs in Richtung der Kraft zu bestimmen.

7. Vorrichtung (100) nach Anspruch 5 oder 6,
wobei die Vorrichtung (100) ausgebildet ist, Kraft-Winkel-Kurven (200a, 200b, 200c) aus den ersten Daten (101) und den zweiten Daten (102) zu entfernen, welche bei einer Hubzahl des Stanzprozesses erzeugt wurden, die niedriger als ein fester Prozentsatz einer Nennhubzahl des Stanzprozesses ist.

8. Vorrichtung (100) nach einem der vorstehenden Ansprüche,
wobei die Vorrichtung ausgebildet ist, die ersten Daten (101) und die zweiten Daten (102) pro erfasster Periode des Stanzprozesses um einen oder mehrere Null-Einträge zu erweitern bis die zweiten Daten (102) eine einheitliche Länge und Schrittweite in Bezug auf die ersten Daten (101) aufweisen.

9. Vorrichtung (100) nach einem der vorstehenden Ansprüche,

wobei die ersten Daten (101) und die zweiten Daten (102) Kraft-Winkel-Kurven (300a, 300b, 300c) umfassen, und

wobei die Vorrichtung (100) ausgebildet ist, aus den Kraft-Winkel-Kurven (300a, 300b, 300c) eine Referenzkurve durch Mittelwertbildung zu erzeugen und eine Anomalie basierend auf einer Abweichung der Kraft-Winkel-Kurven (300a, 300b, 300c) zu der Referenzkurve zu bestimmen.

10. Vorrichtung (100) nach Anspruch 9,
wobei die Abweichung auf einem Produkt einer Standardabweichung der Kraft-Winkel-Kurven (300a, 300b, 300c) und einem einstellbaren Faktor basiert.

11. Vorrichtung (100) nach Anspruch 9 oder 10,
wobei die ersten Daten (101) und die zweiten Daten (102) in verschiedene Kanäle unterteilt sind, wobei ein jeweiliger Kanal erste (101) und zweite (102) Daten umfasst, die mit einem entsprechenden Piezo-Sensor an dem Stanzwerkzeug aufgezeichnet wurden.

12. Vorrichtung (100) nach Anspruch 11,
wobei die Vorrichtung (100) ausgebildet ist, bei Erkennen einer Anomalie in der Kraft-Winkel-Kurve (300a, 300b, 300c) eines der verschiedenen Kanäle auch die entsprechenden Kraft-Winkel-Kurven (300a, 300b, 300c) der anderen Kanäle als abnormal zu markieren.

13. Vorrichtung (100) nach einem der vorstehenden Ansprüche,
wobei die Vorrichtung (100) ausgebildet ist, eine Kompensationsfunktion für den thermischen Einfluss (400) der dritten Daten (103) auf die ersten Daten (101) und die zweiten Daten (102) zu bestimmen.

14. Vorrichtung (100) nach Anspruch 13,
wobei die Kompensationsfunktion auf einem Modell basiert, das eine Abweichung der ersten Daten (101) in Abhängigkeit der dritten Daten (103) spezifiziert, wobei das Modell auf einer mathematischen Approximationsfunktion und/oder auf einer Prädiktion mittels Künstlicher Intelligenz basiert.

**15.** Vorrichtung (100) nach Anspruch 13 oder 14,
wobei die Vorrichtung (100) ausgebildet ist, die Kompensationsfunktion für jeden einzelnen Winkel zu bestimmen und den thermischen Störeinfluss (400) der dritten Daten (103) auf die ersten Daten (101) und zweiten Daten (102) für jeden einzelnen Winkel zu kompensieren.

**16.** Verfahren (900) zur Zustandsbestimmung eines Stanzprozesses, bei dem ein Stanzwerkzeug (730, 800) zum Stanzen eines Werkstoffs periodisch von einer Ausgangsstellung (710) in eine Endstellung (710) bewegt wird, wobei das Verfahren die folgenden Schritte aufweist:

Erhalten (901) von ersten Daten (101), welche eine Kraft anzeigen, die bei dem Bewegen des Stanzwerkzeugs von der Ausgangsstellung in die Endstellung über eine Mehrzahl von Perioden des Stanzprozesses durch das Stanzwerkzeug auf den Werkstoff ausgeübt wird;
Erhalten (902) von zweiten Daten (102), welche einen Winkel oder einen Weg anzeigen, die das Stanzwerkzeug bei dem Bewegen von der Ausgangsstellung in die Endstellung über die Mehrzahl von Perioden des Stanzprozesses zurückgelegt hat;
Erhalten (903) von dritten Daten (103), welche eine Temperatur des Stanzwerkzeugs über die Mehrzahl von Perioden des Stanzprozesses anzeigen;
Entfernen (904) von Anlaufdaten aus den ersten Daten (101) und den zweiten Daten (102), welche während Perioden einer Inbetriebnahme des Stanzwerkzeugs erfasst wurden;
Interpolieren (905) der ersten Daten (101) und der zweiten Daten (102), um eine einheitliche Länge und Schrittweite der zweiten Daten (102) in Bezug auf die ersten Daten (101) für die Mehrzahl von Perioden des Stanzprozesses zu erhalten;
Erkennen und Entfernen (906) von Anomalien in den ersten Daten (101) und zweiten Daten (102);
Bestimmen und Kompensieren (907) eines thermischen Störeinflusses der dritten Daten (103) auf die ersten Daten (101) und zweiten Daten (102); und
Bestimmen des Zustands (908) des Stanzprozesses basierend auf den um den thermischen Störeinfluss kompensierten ersten Daten (101) und zweiten Daten (102).

100

Erste
Daten

Zweite
Daten

Dritte
Daten

101

102

103

110 — Entfernen von
Anlaufdaten

112 — Interpolation

114 — Entfernen von
Anomalien

116 — thermische
Kompensation

118 — Zustandsbestimmung

Zustand

104

Fig. 1

Fig. 2

Fig. 3

Fig. 4

500a

Category
— 28-10-2020
— 29-10-2020
— 02-11-2020
— 03-11-2020
— 11-01-2021
— 12-01-2021
— 13-01-2021
— 14-01-2021
— 11-02-2021
— 12-02-2021
— 15-02-2021
— 18-02-2021
— 19-02-2021
— 22-02-2021

a)

Zeit

500b

Category
— 28-10-2020
— 29-10-2020
— 02-11-2020
— 03-11-2020
11-01-2021
— 12-01-2021
13-01-2021
— 14-01-2021
— 11-02-2021
— 12-02-2021
— 15-02-2021
— 18-02-2021
— 19-02-2021
22-02-2021

b)

Zeit

Fig. 5

Fig. 6

Fig. 7

800

810

**Funktionsplatten**

820

821

**Gestellplatten**

Aufspannplatte oben

811

Druckplatte
(gehärtet)

822

Kopfplatte

812

Stempelhalteplatte
(gehärtet/weich)

823

Zwischenplatte

Führungs- / Abstreifplatte
(gehärtet)

824

Stanzstreifen (Produkt)
Bearbeitungsebene

813

Schneidplatte
(gehärtet)

825

Grundplatte

826

814

Aufspannleisten unten

## Fig. 8

Fig. 9

Europäisches
Patentamt

European
Patent Office

Office européen
des brevets

**EUROPÄISCHER RECHERCHENBERICHT**

Nummer der Anmeldung

**EP 22 16 1917**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | UBHAYARATNE INDIVARIE ET AL: "An audio signal based model for condition monitoring of sheet metal stamping process", 2015 IEEE 10TH CONFERENCE ON INDUSTRIAL ELECTRONICS AND APPLICATIONS (ICIEA), IEEE, 15. Juni 2015 (2015-06-15), Seiten 1267-1272, XP032816062, DOI: 10.1109/ICIEA.2015.7334303 [gefunden am 2015-11-20] * das ganze Dokument * ----- | 1-16 | INV. G05B19/4065 |
| A | US 2013/173202 A1 (BOERHOUT JOHANNES L [US]) 4. Juli 2013 (2013-07-04) * Absätze [0008], [0011] - [0013], [0029] - [0033], [0036] * ----- | 1,16 | |
| A | EP 1 259 335 B1 (PCC SPEC PROD INC [US]) 17. Oktober 2007 (2007-10-17) * Absatz [0023] * ----- | 1,16 | |

RECHERCHIERTE
SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 8. August 2022 | Salvador, Didier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 16 1917

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2022

| Im Recherchenbericht angeführtes Patentdokument | Datum der Veröffentlichung | Mitglied(er) der Patentfamilie | Datum der Veröffentlichung |
|---|---|---|---|
| US 2013173202 A1 | 04-07-2013 | KEINE | |
| EP 1259335 B1 | 17-10-2007 | AT 375827 T | 15-11-2007 |
| | | AU 3993601 A | 12-09-2001 |
| | | AU 2001239936 B2 | 09-09-2004 |
| | | BR 0108770 A | 26-11-2002 |
| | | CA 2401161 A1 | 07-09-2001 |
| | | CN 1406158 A | 26-03-2003 |
| | | DE 60130971 T2 | 17-07-2008 |
| | | EP 1259335 A1 | 27-11-2002 |
| | | ES 2295143 T3 | 16-04-2008 |
| | | JP 2003525485 A | 26-08-2003 |
| | | KR 20020091107 A | 05-12-2002 |
| | | MX PA02008426 A | 13-12-2002 |
| | | PL 357509 A1 | 26-07-2004 |
| | | US 2003014150 A1 | 16-01-2003 |
| | | WO 0164365 A1 | 07-09-2001 |

EPO FORM P0461

Für nähere Einzelheiten zu diesem Anhang : siehe Amtsblatt des Europäischen Patentamts, Nr.12/82